Europäisches Patentamt

European Patent Office

Office européen des brevets

(11) Publication number: **0 302 027 B1**

(12) EUROPEAN PATENT SPECIFICATION

(45) Date of publication of patent specification: **02.09.92** (51) Int. Cl.⁵: **A01D 41/14**

(21) Application number: **88830298.1**

(22) Date of filing: **12.07.88**

(54) A device for coupling the cutting platform to a combine harvester.

(30) Priority: **23.07.87 IT 6764287**

(43) Date of publication of application:
**01.02.89 Bulletin 89/05**

(45) Publication of the grant of the patent:
**02.09.92 Bulletin 92/36**

(84) Designated Contracting States:
**DE ES FR GB IT**

(56) References cited:
**DE-A- 1 482 841
DE-A- 1 507 212
FR-A- 2 082 257
US-A- 4 444 000**

(73) Proprietor: **FIATGEOTECH - TECNOLOGIE PER
LA TERRA S.p.A.
Viale delle Nazioni, 55
I-41100 Modena(IT)**

(72) Inventor: **Raineri, Giuseppe
Via San Cristoforo 25
I-36061 Bassano del Grappa (Vicenza)(IT)**

(74) Representative: **Notaro, Giancarlo et al
c/o Jacobacci-Casetta & Perani S.p.A. Via
Alfieri, 17
I-10121 Torino(IT)**

## Description

A device for coupling the cutting platform to a combine harvester

The present invention relates to combine harvesters and particularly concerns a device for coupling the cutting platform to a combine harvester, of the type indicated in the pre-characterising portion of Claim 1. A device of this type is known from US-A-4 444 000.

The object of the invention is to produce a coupling device which has a simple and reliable structure and at the same time enables the coupling and uncoupling operations to be executed quickly and easily.

In order to achieve this object, the subject of the invention is a device having the additional features indicated in the characterising portion of Claim 1.

In a preferred embodiment, two hooks are provided which are controlled by respective control levers situated on the same side of the combine harvester. In this way, the operation of the two hooks, which are independent of each other, can be carried out from one side of the combine harvester, to the benefit of its ease and speed of execution. As will made clear below, the device is formed so that it can be operated without the need to see the hooks during its operation. This enables the hooks to be situated even in a position which cannot easily be reached by the operator.

Further characteristics and advantages of the invention will become clear from the description which follows with reference to the appended drawings, provided purely by way of non-limiting example, in which:

Figure 1 is a schematic side view of the front part of a combine harvester provided with the device according to the invention;

Figure 2 is a perspective view of part of the machine of Figure 1,

Figure 3 shows a detail of Figure 2 on an enlarged scale,

Figure 4 shows a further perspective view of the detail of Figure 3,

Figures 5 and 6 are perspective views which show the detail of Figures 3 and 4 in a different operative condition, and

Figure 7 is a section of the detail of Figure 3.

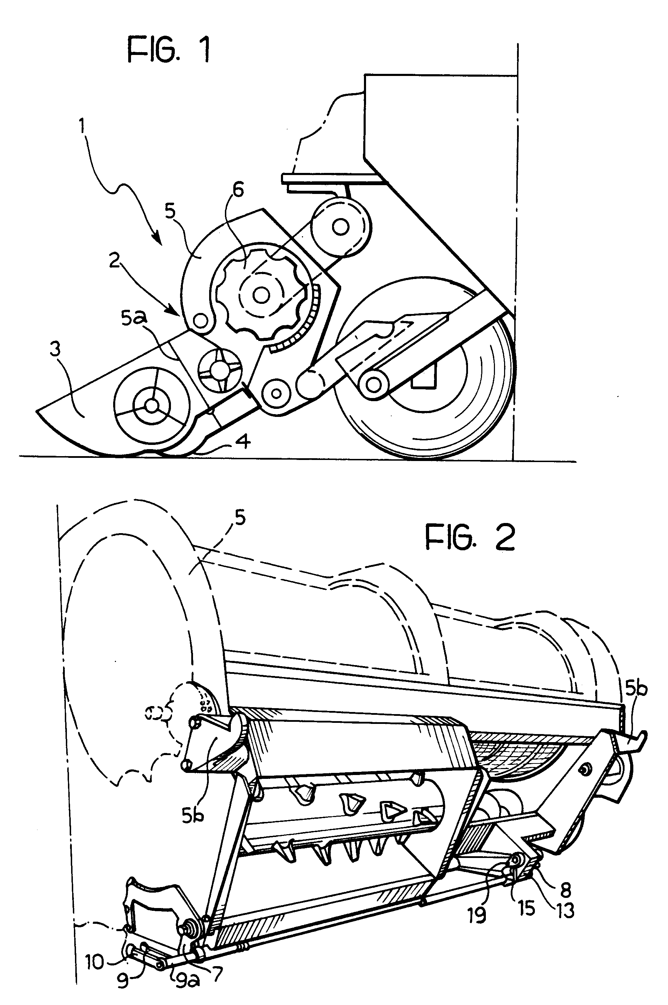

Figure 1 shows the front part of a combine harvester 1.

The general structure of this combine harvester is that described and illustrated in the present Applicant's European patent No. 42824. The combine harvester includes a cutting platform 2. The cutting platform 2 includes a front unit 3 on which the cutting bar 4 is situated, and a rear unit 5 including an axial-flow thresher-separator unit.

The present invention relates to a device for coupling the unit 3 to the front face 5a of the unit 5. Naturally, however, the device according to the invention is usable on any other type of combine harvester in which it is necessary to couple the structure carrying the cutting bar to the rear part of the structure of the combine harvester.

As shown more clearly in Figure 2, the structure 5 has two lateral supports 5b intended to engage corresponding seats provided in the support structure 3 of the cutting bar. When the structure 3 is uncoupled and resting on the ground, the supports 5b may be engaged in the seats by arranging the combine harvester so that the supports 5b are located beneath the seats and then lifting the cutting platform, by means of the lifting means (not illustrated) with which the combine harvester is provided, so as to engage the supports 5b within the seats. In this way, the structure of the cutting bar is suspended in an articulated manner by the supports 5b. The centre of gravity of this structure is forward of the supports 5b, so that the structure 3 tends - by virtue of its own weight - to bear against the front face of the structure 5.

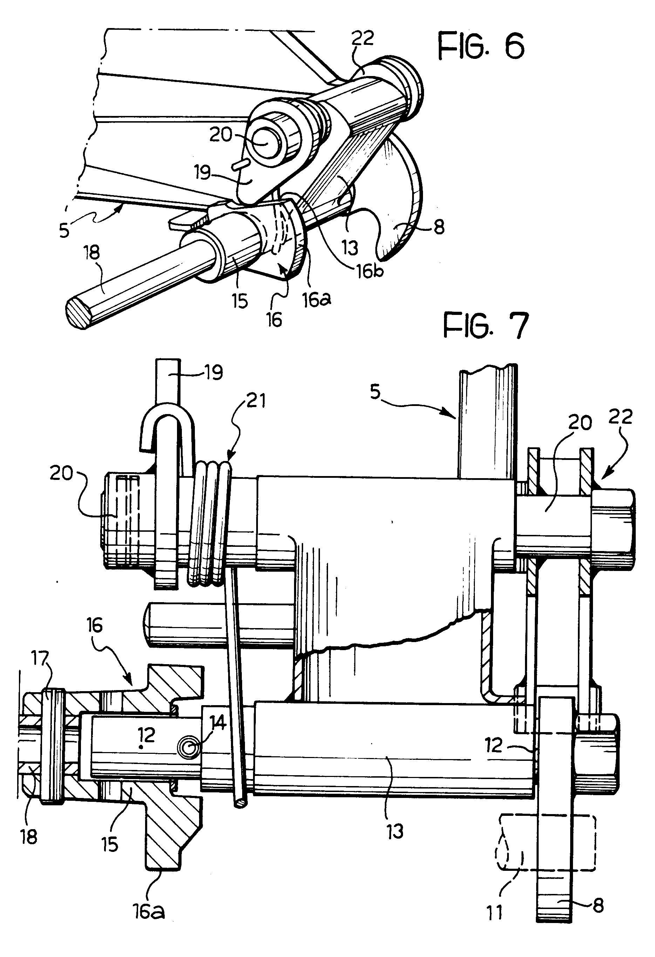

The device according to the invention serves to lock the support structure 3 of the cutting bar to the lower part of the front face of the structure 5. This is achieved by means of a pair of lateral hooks 7, 8 which are controlled by respective control levers 9, 10 situated on the right-hand side of the combine harvester (Figure 2). In their operative position, the two hooks 7, 8 engage two catch pins 11 (one of which is illustrated by a broken line in Figure 7) carried by the structure of the cutting bar.

The structure of the device will be described below with reference to the hook 8 situated on the left-hand side of the machine. The conformation of the mechanism associated with the right-hand hook is exactly the same.

The hook 8 is welded to one end of a shaft 12 (Figure 7) which is rotatably mounted in a support 13 forming part of the structure 5 of the combine harvester. The shaft 12 is connected by a transverse pin 14 for rotation with the hub 15 of a cam member 16 whose function will be described below. The hub 15 is connected by a transverse pin 17 for rotation with an end of a tubular shaft 18 whose opposite end is driven by the lever 10.

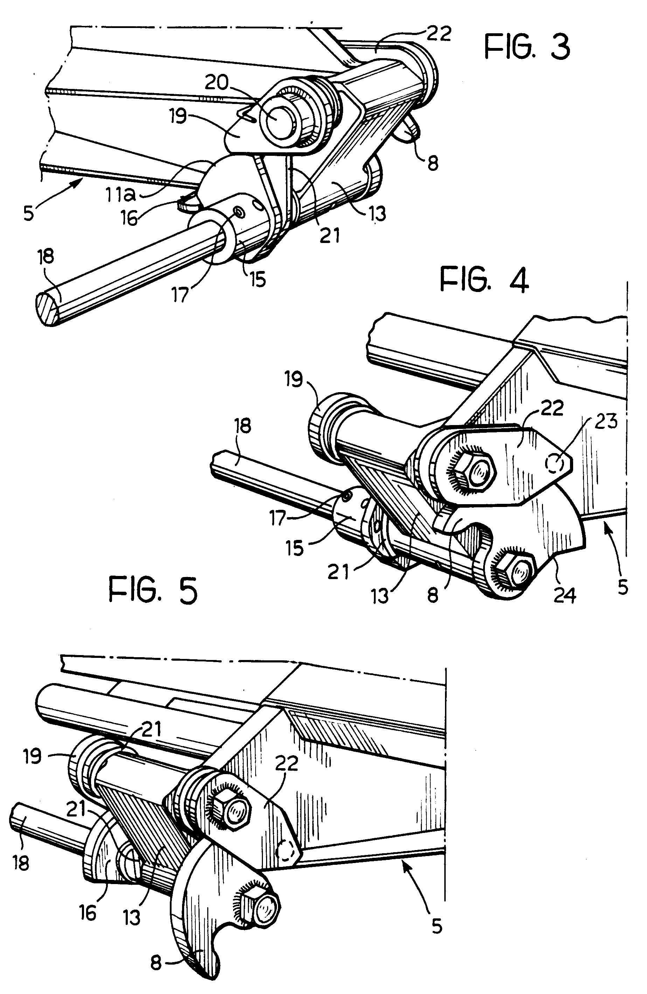

The cam member 16 has a circumferential edge 16a on which is engaged the end of a lever 19 rigidly supported by a shaft 20. The shaft 20 is rotatably mounted in the support 13. The lever 19 is biased towards the position of engagement of the cam member 16 by a pin spring 21 which is wound helically around the shaft 20 and has its two end arms connected to the lever 19 and the shaft 13 respectively. The end of the shaft 20 opposite that carrying the lever 19 carries a forked member 22 to the free end of which is fixed a locking pin 23 adapted to be engaged in a seat 24 of the hook 8 (Figure 4) to lock the hook 8 in its operative position.

The seat in the cam member 16 for the engagement of the transverse pin 14 is so formed that, when the control lever 10 is moved towards its locked position, it causes a corresponding rotation of the cam member 16 and the hook 8, whilst, when the control lever 10 is moved towards its unlocked position, the cam member 16 transmits the rotation to the hook 8 only after the cam member has completed a first section of rotation.

The operation of the device according to the invention is as follows.

On the assumption that the structure of the cutting platform is separated from the rest of the combine harvester and is lying on the ground, it is first picked up by the two supports 5b and lifted from the ground by the operation of the lifting means of the cutting platform. At this point, the control levers 9 and 10 are operated to move the hooks 7 and 8 into their operative positions. In particular, the lever 10 causes rotation of the hook 8 (from the position illustrated in Figures 3 and 4) by means of the shaft 18 and the cam member 16. As a result of this rotation, the lever 19 travels along the whole of the circumferential surface 16a of the cam member 16 until it engages the side 16b (Figure 6) of the cam member. This causes a downward rotation of the lever 19 and a corresponding rotation of the locking lever 22 which brings the locking pin 23 into engagement with the seat 24, locking the hook 8 in the operative position (Figure 5).

When the structure of the cutting platform is to be unlocked, it suffices to move the lever 10 in the opposite direction. Initially, this rotation causes only a rotation of the cam member 16 which serves to bring the lever 19 and consequently the locking lever 22 into the position of disengagement from the seat 24. After this initial rotation, which is through approximately 37° in the embodiment illustrated, further rotation of the control lever 10 causes the hook 8 to return to the rest position.

The particular arrangement described above ensures that the hook is kept in the required position, regardless of any load or external reaction.

The lever drives a tubular shaft 9a (Figure 2) which operates a mechanism similar to that described above. The fact that both the levers 9 and 10 are on the same side of the machine ensures that the coupling and uncoupling operations can be carried out quickly and easily.

## Claims

1. A device for coupling the cutting platform to a combine harvester, which comprises a rotary hook (8) which can be rotated by means of a control lever (10) between a rest position and an operative position in which it engages a catch element (11) carried by the cutting platform,

   a member (23) for locking the hook (8) in its operative position, which is biassed towards the locked position by resilient means (21), and

   a member (16) for moving the locking member (23) away from its locked position, characterised in that said member (16) for moving the locking member (23) away from its locked position is a cam member interposed in the connection between the control lever (10) and the hook (8) so that rotation of the control lever towards the locked position causes a corresponding rotation of the cam member (16) and the hook (8), whilst rotation of the control lever towards the unlocked position is transmitted to the hook (8) by the cam member (16) only after the cam member has completed an initial section of its rotation, which moves the locking member (23) away from its locked position.

2. A device according to Claim 1, characterised in that the cam member (16) is engaged with a lever (19) rotatably mounted on the structure of the combine harvester and resiliently biassed against the cam member (16), the locking member being constituted by a pin (23) mounted at the free end of an auxiliary lever (22) connected for rotation with the lever (19) which is engaged with the cam member (16).

3. A device according to Claim 2, characterised in that the body of the hook (8) has a seat (24) in which the locking pin (23) is engaged when the hook (8) reaches its operative position.

4. A device according to Claim 1, characterised in that the cam member (16) is connected for rotation with the control lever (10) by means of a shaft (18), and in that the hook (8) is connected for rotation with the cam member (16) by means of a transverse pin (14), the seat for the pin (14) formed in the cam member (16) being so formed that rotation of the control lever towards the unlocked position is transmitted to the hook (8) by the cam member (16) only after the cam member (16) has completed a first section of its rotation.

5. A device according to Claim 1, characterised in that it includes a pair of hooks (7,8) controlled by respective control levers (9, 10) which are situated on the same side of the combine harvester.

## Patentansprüche

1. Eine Vorrichtung zum Anschließen der Schneidwerksmulde an einen Mähdrescher, mit einem drehbaren Haken (8), der mittels eines Betätigungshebels (10) zwischen einer Ruhestellung und einer Betriebsstellung gedreht werden kann, in der er mit einem von der Schneidwerksmulde gehaltenen Eingriffselement (11) in Eingriff steht,

   einem Element (23) zum Sperren des Hakens (8) in seiner Betriebsstellung, welches mittels elastischer Mittel (21) in Richtung der Sperrstellung beaufschlagt ist, und

   einem Element (16) zum Bewegen des Sperrelements (23) aus seiner Sperrstellung heraus, dadurch gekennzeichnet, daß das Element (16) zum Bewegen des Sperrelementes (23) aus seiner Sperrstellung heraus ein Nockenelement ist, das in der Verbindung zwischen dem Betätigungshebel (10) und dem Haken (8) angeordnet ist, so daß eine Drehung des Betätigungshebels in Richtung der Sperrstellung eine entsprechende Drehung des Nockenelements (16) und des Hakens (8) verursacht, wohingegen eine Drehung des Betätigungshebels in Richtung der entsperrten Stellung durch das Nockenelement (16) auf den Haken (8) nur übertragen wird, nachdem das Nockenelement eine Anfangsstrecke seiner Drehung, die das Sperrelement (23) aus seiner Sperrstellung herausbewegt, vollständig zurückgelegt hat.

2. Eine Vorrichtung nach Anspruch 1, dadurch gekennzeichnet, daß das Nockenelement (16) mit einem drehbar am Aufbau des Mähdreschers angebrachten und elastisch gegen das Nockenelement (16) vorgespannten Hebel (19) im Eingriff steht, wobei das Sperrelement durch einen Stift (23) gebildet ist, der am freien Ende eines Zusatzhebels (22) angebracht ist, der zwecks Drehung mit dem sich mit dem Nockenelement (16) im Eingriff befindlichen Hebel (19) in Verbindung steht.

3. Eine Vorrichtung nach Anspruch 2, dadurch gekennzeichnet, daß der Körper des Hakens (8) eine Sitzfläche (24) aufweist, an die der Sperrstift (23) angreift, wenn der Haken (8) seine Betriebsstellung erreicht.

4. Eine Vorrichtung nach Anspruch 1, dadurch gekennzeichnet, daß das Nockenelement (16) zwecks Drehung mittels einer Achse (18) mit dem Betätigungshebel (10) in Verbindung steht, und daß der Haken (8) zwecks Drehung mittels eines Querstiftes (14) mit dem Nockenelement (16) verbunden ist, wobei die im Nockenelement (16) ausgebildete Aufnahme für den Stift (14) so geformt ist, daß eine Drehung des Betätigungshebels in Richtung der entsperrten Stellung durch das Nockenelement (16) auf den Haken (8) nur übertragen wird, nachdem das Nockenelement (16) eine erste Strecke seiner Drehung vollständig zurückgelegt hat.

5. Eine Vorrichtung nach Anspruch 1, dadurch gekennzeichnet, daß sie ein Paar Haken (7, 8) aufweist, die durch jeweilige, an der gleichen Seite des Mähdreschers angeordnete Betätigungshebel (9, 10) betätigbar sind.

## Revendications

1. Dispositif pour accoupler le tablier de coupe à une moissonneuse-batteuse, qui comprend un crochet rotatif (8) pouvant être tourné, au moyen d'un levier (10) de commande, entre une position de repos et une position de fonctionnement dans laquelle il s'engage sur un élément (11) d'encliquetage porté par le tablier de coupe, un élément (23) permettant de verrouiller le crochet (8) dans sa position de fonctionnement, cet élément étant tendu dans le sens de la position de verrouillage par un moyen élastique (21), et un élément (16) permettant de déplacer l'élément (23) de verrouillage au loin de sa position de verrouillage, caractérisé en ce que ledit élément (16) permettant de déplacer l'élément (23) de verrouillage au loin de sa position verrouillée est un élément à came intercalé dans la liaison entre le levier (10) de commande et le crochet (8), de telle sorte que la rotation du levier de commande dans le sens de la position de verrouillage provoque une rotation correspondante de l'élément (16) à came et du crochet (8), alors que la rotation du levier de commande dans le sens de la position de déverrouillage est transmise au crochet (8), par l'élément (16) à came, seulement après que l'élément à came a parcouru une section initiale de sa rotation, déplaçant l'élément (23) de verrouillage au loin de sa position de verrouillage.

2. Dispositif selon la revendication 1, caractérisé en ce que l'élément (16) à came est en engagement avec un levier (19) monté de façon à pouvoir tourner sur la structure de la moissonneuse-batteuse et tendu élastiquement contre l'élément (16) à came, l'élément de verrouillage étant constitué par un doigt (23) monté sur l'extrémité libre d'un levier auxiliaire (22) connecté au levier (19), de façon à tourner avec celui-ci, ce levier étant en engagement avec l'élément (16) à came.

3. Dispositif selon la revendication 2, caractérisé en ce que le corps du crochet (8) possède un siège (24) dans lequel s'engage le doigt (23) de verrouillage lorsque le crochet (8) atteint sa position de fonctionnement.

4. Dispositif selon la revendication 1, caractérisé en ce que l'élément (16) à came est connecté au levier (10) de commande, de manière à tourner avec celui-ci, au moyen d'un arbre (18), et en ce que le crochet (8) est connecté à l'élément (16) à came, de manière à tourner avec celui-ci, au moyen d'une goupille transversale (14), le siège de la goupille (14) étant réalisé dans l'élément (16) à came et étant formé de manière telle qu'une rotation du levier de commande dans le sens de la position de déverrouillage soit transmise au crochet (8) par l'élément (16) à cave seulement après que l'élément (16) à cave a parcouru une première section de sa rotation.

5. Dispositif selon la revendication 1, caractérisé en ce qu'il comporte une paire de crochets (7, 8) commandés par des leviers respectifs (9, 10) de commande, qui sont situés du même côté de la moissonneuse batteuse.

FIG. 1

FIG. 2

FIG. 3

FIG. 4

FIG. 5

FIG. 6

FIG. 7